# EUROPEAN PATENT APPLICATION

(11) **EP 1 873 748 A2**
(43) Date of publication of application: **02.01.2008**
(21) Application number: 07011310.5
(22) Date of filing: 08.06.2007
(51) Int. Cl.: G09G 3/36, G02F 1/1343, G02F 1/1333, G02F 1/139, G02F 1/1362

(54) **Triangular arrangement of subpixels on both sides of a common data line in an active matrix LCD**

(30) Priority: 27.06.2006 KR 20060058293
(71) Applicant: Samsung Electronics Co., Ltd., Yeongtong-gu Suwon-city, Gyeonggi-do 442-742 (KR)
(72) Inventor: Cho, Seon-ah, Busan (KR); Park, Jin-won, Gyeonggi-do (KR); Um, Yoon-sung, Gyeonggi-do (KR); Sohn, Ji-won, Seoul (KR)
(74) Representative: Dr. Weitzel & Partner

(57) **Abstract**

A unit pixel (161) of a colour active matrix liquid crystal display (vertically aligned (VAL) type) consists of three individually switched subpixels (161a,161b,161c). The subpixels are arranged in a vertically staggered fashion on an insulating substrate at positions corresponding to the vertices of a triangle (delta arrangement): the first (161a) and second (161b) subpixels are arranged next to each other on one side of a data line (141) and form the base of the triangle. The base runs essentially parallel to the general course of the data line. The third subpixel (161c) lies on the other side of the data line at the apex of the triangle, the apex lying substantially over the midpoint of the base (i.e. over the gap between the first and second pixels). With this staggered arrangement the third subpixel is adjacent to portions of both the first and second subpixels. The first and second subpixels are respectively connected by a first and a second source electrode (142) to one side of the data line, while the third subpixel (161c) is connected to the other side of the same data line at a position substantially midway between the first and the second source electrodes. The subpixels are addressed by three individual gate lines (121) arranged parallel to each other and substantially orthogonal to the general course of the data line. The gate line for the third subpixel runs in the gap between the first and second subpixels, while the common data line (141) runs in the gap between the third and the first and second subpixels. The resulting subpixel lay-out represents a kind of column multiplexing scheme. The subpixels may have a chevron shape, in which case the dataline has a zigzag form within the unit pixel to match the slanted edges of the subpixels. However, the general course of the data line is in a direction essentially orthogonal to that of the gate lines. Shift registers (123) are connected at one end of the gate lines (121) and allow the sequential driving of the subpixels in the unit pixel (driving order: first, third and second). In general, each subpixel corresponds to a region of a primary colour (RGB) in a colour filter arranged on the opposite substrate. The arrangement provides a liquid crystal display having a high aperture ratio and high light transmittance.
Keywords: staggered pixel, chevron pixel, sequential driving, column multiplexing, common data line, multiple scan line / gate line addressing, cutout.

## Description

### BACKGROUND OF THE INVENTION

### Technical Field

The present disclosure relates to a liquid crystal display.

### Discussion of Related Art

A liquid crystal display (LCD) typically comprises an LCD panel and a backlight unit. The LCD panel comprises a thin film transistor (TFT) substrate on which TFTs are formed; a color filter substrate on which color filters are formed; and a liquid crystal layer disposed therebetween. The LCD panel does not emit light by itself. Thus, the backlight unit is disposed behind the LCD panel to provide light for transmission therethrough so as to display an image.

Recently, LCDs have been employed in various display devices, such as televisions, cell phones, and the like. Although the LCD has been improved in viewing angle, color reproducibility, brightness, etc. as compared with a cathode ray tube (CRT), a plasma display panel (PDP) and the like, the LCD still requires its response speed to be improved.

A patterned vertically aligned (PVA) mode LCD is intended to provide an improved viewing angle and includes a pixel electrode and a common electrode, which have so-called cutting patterns, respectively. In the PVA mode LCD, the viewing angle is improved by adjusting the orientation of the liquid crystal molecules in the liquid crystal layer using a fringe field, which is generated by the above-mentioned cutting pattern.

A conventional LCD including the PVA mode LCD, however, has a low aperture ratio and a low light transmittance.

### SUMMARY OF THE INVENTION

Exemplary embodiments of the present invention provide an LCD having an improved aperture ratio and an improved light transmittance.

According to an exemplary embodiment of the present invention, a liquid crystal display comprises: a first insulating substrate; a conductor formed on the first insulating substrate and including a gate line and a data line; and a pixel electrode electrically connected to the gate line and the data line and including a first pixel electrode and a second pixel electrode, which are adjacent each other in an extending direction of the data line, and a third pixel electrode partially facing both the first pixel electrode and the second pixel electrode.

In an exemplary embodiment of the present invention, the first pixel electrode, the second pixel electrode and the third pixel electrode are connected to different respective gate lines.

According to an exemplary embodiment of the present invention, the gate line connected to the third pixel electrode passes along a boundary of the first pixel electrode and the second pixel electrode.

In an exemplary embodiment of the present invention, the first pixel electrode, the second pixel electrode and the third pixel electrode are connected to the same data line.

According to an exemplary embodiment of the present invention, the first, second, and third pixel electrodes connected to the data line are disposed alternately right and left with respect to the data line along the extending direction of the data line.

According to an exemplary embodiment of the present invention, the liquid crystal display further comprises a shift register connected to the gate line to apply a driving signal to the gate line. The shift register is formed on first insulating substrate.

In an exemplary embodiment of the present invention, lateral sides of the pixel electrodes in the extending direction of the data line are zigzag-shaped.

According to an exemplary embodiment of the present invention, the data line extends along the lateral sides of the pixel electrodes.

According to an exemplary embodiment of the present invention, the lateral sides of the pixel electrode form an angle of 40 degrees to 50 degrees with respect to the extending direction of the gate line.

In an exemplary embodiment of the present invention, a pixel electrode cutting pattern is formed on the pixel electrode along the extending direction of the gate line.

In an exemplary embodiment of the present invention, the liquid crystal display further comprises a second insulating substrate facing the pixel electrode, and a liquid crystal layer in a vertically aligned (VA) mode formed between the pixel electrode and a second insulating substrate.

According to an exemplary embodiment of the present invention, the liquid crystal display further comprises a common electrode formed on the second insulating substrate, wherein a common electrode cutting pattern is formed on the common electrode and is parallel with the lateral sides of the pixel electrodes.

In an exemplary embodiment of the present invention, the first pixel electrode, the second pixel electrode and the third pixel electrode are sequentially driven.

According to an exemplary embodiment of the present invention, a liquid crystal display comprises a plurality of pixel electrodes that are chevron-shaped and that include a first pixel electrode and a second electrode disposed adjacent each other in a first direction and a third pixel electrode partially facing both the first pixel electrode and the second electrode in a second direction perpendicular to the first direction.

In an exemplary embodiment of the present invention, each pixel electrode comprises an upper part and a lower part bent from the upper part, the upper part of the third pixel electrode faces the lower part of the first pixel electrode, and the lower part of the third pixel electrode faces the upper part of the second pixel electrode.

According to an exemplary embodiment of the present invention, the first pixel electrode, the second pixel electrode and the third pixel electrode are sequentially driven.

According to exemplary embodiment of the present invention, a liquid crystal display comprises: an insulating substrate; a conductor formed on the insulating substrate and including a gate line and a data line; and a pixel electrode connected to the gate line and the data line, the pixel electrode connected to the data line and including a first pixel electrode disposed at a left side of the data line and a second pixel electrode disposed at a right side of the data line, the first pixel electrode and the second pixel electrode partially facing in an extending direction of the gate line, the pixel electrode being chevron-shaped, the data line formed along a circumference of the pixel electrode.

### BRIEF DESCRIPTION OF THE DRAWINGS

Exemplary embodiments of the present disclosure will be understood in more detail from the following descriptions taken in conjunction with the accompanying drawings of which:
FIG. 1 is an arrangement view of an LCD according to an exemplary embodiment of the present invention;
FIG. 2 is a sectional view taken along line II-II in FIG. 1;
FIG. 3 is a sectional view taken along line III-III in FIG. 1;
FIG. 4 illustrates connection of a pixel electrode and a line in the LCD according to the exemplary embodiment of the present invention shown in FIG. 1;
FIG. 5 illustrates a driving method of the LCD according to the exemplary embodiment of the present invention shown in FIG. 1;
FIG. 6 is an arrangement view of a pixel electrode in an LCD according to an exemplary embodiment of the present invention; and
FIG. 7 is an arrangement view of a pixel electrode in an LCD according to an exemplary embodiment of the present invention.

### DETAILED DESCRIPTION OF EXEMPLARY EMBODIMENTS

Exemplary embodiments of the present invention will be described in more detail with reference to the accompanying drawings. The present invention may, however, be embodied in many different forms and should not be construed as limited to the exemplary embodiments set forth herein.

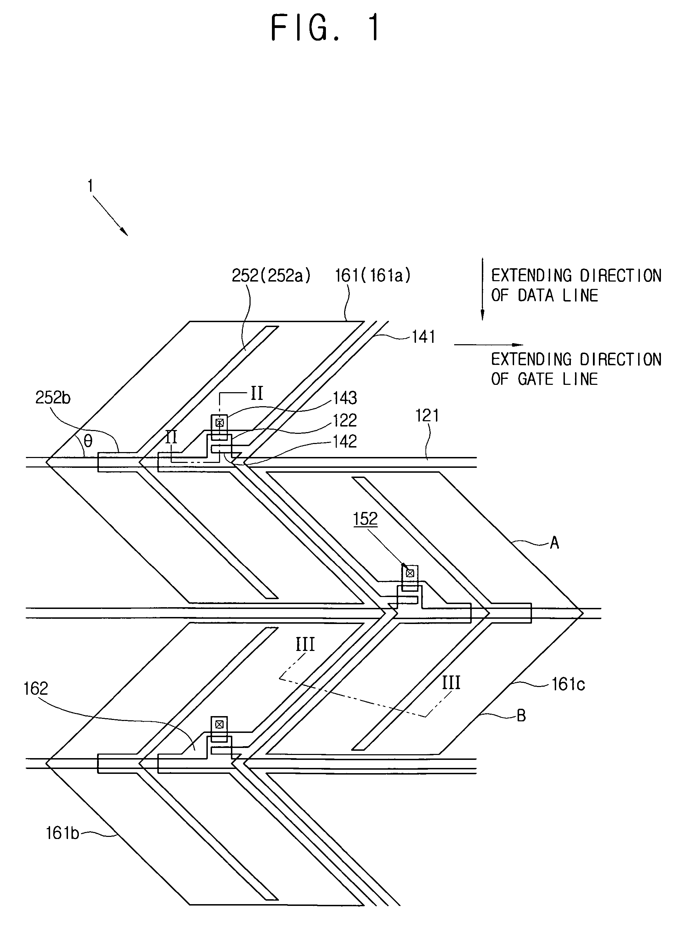

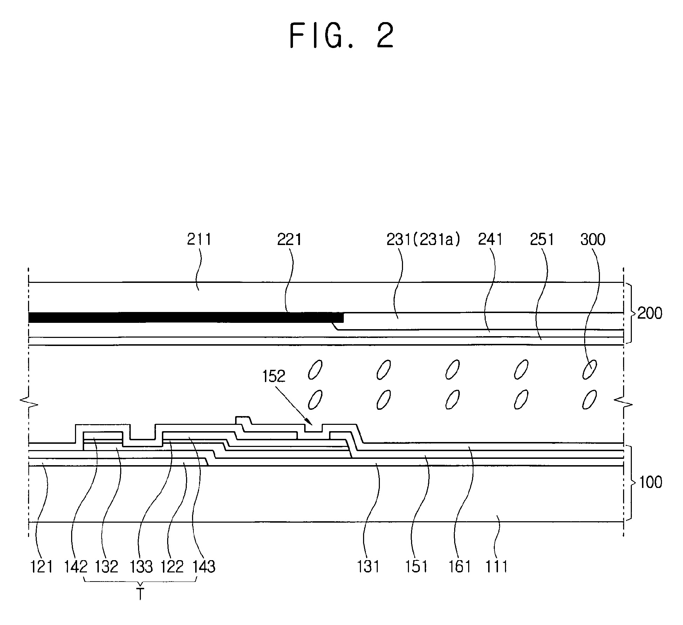

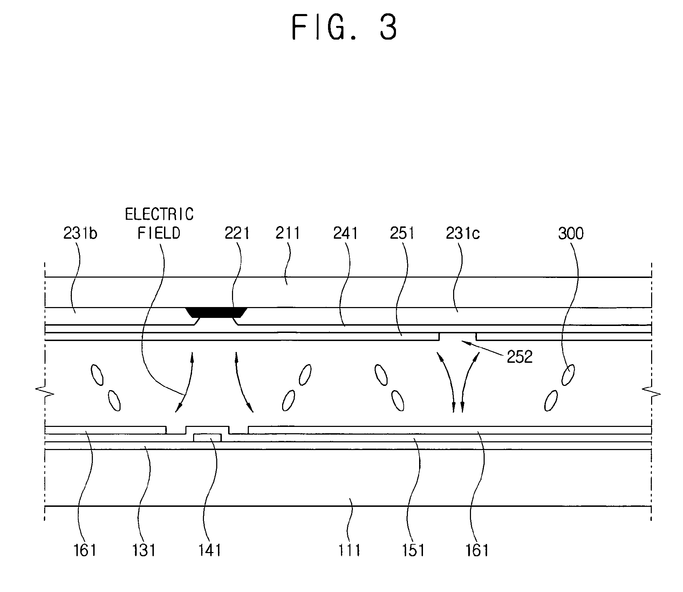

Referring to FIGs. 1 through 3, an LCD according to an exemplary embodiment of the present invention will be described in detail.

The LCD 1 includes a TFT substrate 100, a color filter substrate 200 facing the TFT substrate 100, and a liquid crystal layer 300 disposed between the substrates 100 and 200.

In regard to the TFT substrate 100, gate wires 121 and 122 are formed on a first insulating substrate 111. The gate wires 121 and 122 may be a single layer or multi layers. The gate wires 121 and 122 include a gate line 121 extending transversely and a gate electrode 122 connected to the gate line 121.

The gate wires 121 and 122 may further include a storage electrode line (not shown) that overlaps with a pixel electrode 161 to form a storage capacitance.

A gate insulating layer 131 is made of silicon nitride (SiNx) or the like and is formed on the first insulating substrate 111 to cover the gate wires 121 and 122.

A semiconductor layer 132 is made of amorphous silicon or the like and is formed on the gate insulating layer 131 of the gate electrode 122. An ohmic contact layer 133 is made of silicide or n+ hydrogenated amorphous silicon that is highly doped with n-type impurities and that is formed on the semiconductor layer 132. The ohmic contact layer 133 is divided into two parts.

A data wire formed of portions 141, 142 and 143 is formed on the ohmic contact layer 133 and on the gate insulating layer 131. The data wire 141, 142 and 143 may be a metal single layer or metal multi layers. The data wire 141, 142 and 143 includes a data line 141 extending vertically to intersect the gate line 121, a source electrode 142 branched from the data line 141 and extending over the ohmic contact layer 133, and a drain electrode 143 separated from the source electrode 142 and formed on a part of the ohmic contact layer 133.

The data line 141 extends up and down overall, but is bent in zigzags along a lateral side of the pixel electrode 161. The source electrode 142 is branched from the data line 141 alternately to the right side and the left side.

A passivation layer 151 includes silicon nitride (SiNx), an a-Si:C:O layer and an a-Si:O:F layer that are deposited by plasma enhanced chemical vapor deposition (PECVD), an acrylic organic insulating layer, or the like, and is formed on the data wiring 141, 142 and 143 and on a portion of the semiconductor layer 132 that is not covered with the data wiring 141, 142 and 143. A contact hole 152 is formed in the passivation layer 151 to expose the drain electrode 143.

A pixel electrode 161 is formed on the passivation layer 151. The pixel electrode 161 is made of a transparent conductive material, such as indium tin oxide (ITO) or indium zinc oxide (IZO).

A pixel electrode cutting pattern 162 is formed on the pixel electrode 161. The pixel electrode cutting pattern 162 is formed to divide the liquid crystal layer 300 into a plurality of domains along with a common electrode cutting pattern 252 (described later). The pixel electrode cutting pattern 162 extends parallel with the gate line 121.

Hereinafter, the manner in which connections are arranged between the foregoing gate line 121, data line 141 and pixel electrode 161 will be described in detail.

The pixel electrode 161 is chevron-shaped and includes three sub-pixel electrodes 161a, 161b and 161c. One pixel includes three sub-pixels corresponding to the sub-pixel electrodes 161a, 161b and 161c. Each of the sub-pixel electrodes 161a, 161b and 161c has an upper part A disposed in the upper part with respect to an extending direction of the data line and a lower part B disposed in a lower part with respect to the extending direction of the data line.

Overall, three sub-pixel electrodes 161a, 161b and 161c in one pixel form a triangular shape. A first sub-pixel electrode 161a and a second sub-pixel electrode 161b are disposed adjacent each other in the extending direction of the data line. A third sub-pixel electrode 161c faces a part of the first sub-pixel electrode 161a and a part of the second sub-pixel electrode 161b in an extending direction of the gate line.

More specifically, the upper part A of the third sub-pixel electrode 161c faces the lower part B of the first sub-pixel electrode 161a, and the lower part B of the third sub-pixel electrode 161c faces the upper part A of the second sub-pixel electrode 161b. An angle θ between the lateral side of the pixel electrode 161 and the gate line 121 is between 40 degrees and 50 degrees.

The data line 141 extends along the boundary of the sub-pixel electrodes 161a, 161b and 161c. That is, the data line 141 is bent in a zigzag shape but does not overlap with the sub-pixel electrodes 161a, 161b and 161c.

The gate line 121 extends along the boundaries of the first and second sub-pixel electrodes 161a and 161b and passes through the middle part of the third sub-pixel electrode 161c. In the exemplary embodiment of the present invention, the gate line 121 is formed corresponding to the pixel electrode cutting pattern 162 of the third sub-pixel electrode 161c.

All of the foregoing sub-pixel electrodes 161a, 161b and 161c in one pixel are connected to the same data line 141. More specifically, the sub-pixel electrodes 161a, 161b and 161c are connected to the same data line 141 in the order of the first, third and second sub-pixel electrodes 161a, 161c and 161b along the extending direction of the data line. Furthermore, the left and right sides of the sub-pixel electrodes 161a, 161b and 161c are alternately connected to the data line 141 along the extending direction of the data line 141.

The color filter substrate 200 will be described in the following. A black matrix 221 is formed on a second insulating substrate 211. The black matrix 221 is disposed between red, green and blue filters to divide the filters, and to prevent light from being irradiated directly to a TFT T disposed on the TFT substrate 100. The black matrix 221 is typically made of a photoresist organic material including a black pigment. The black pigment may be carbon black, titanium oxide or the like.

The color filter layer 231 includes the red, green and blue filters 231a, 231b and 231c, which are alternately disposed and separated by the black matrix 221. The color filter layer 231 endows colors to the light irradiated from the backlight unit (not shown) and that passes through the liquid crystal layer 300. The color filter layer 231 is generally made of a photoresist organic material.

An overcoat layer 241 is formed on the black matrix 231 and the color filter layer 221. The overcoat layer 241 is made of an organic material and provides a flat surface. A common electrode 251 is formed on the overcoat layer 241. The common electrode 251 is made of a transparent conductive material such as indium tin oxide (ITO) or indium zinc oxide (IZO). The common electrode 251 applies a voltage to the liquid crystal layer 300 along with the pixel electrode 161 in the TFT substrate 100. The common electrode cutting pattern 252 is formed on the common electrode 251. The common electrode cutting pattern 252 divides the liquid crystal layer 300 into a plurality of domains along with the pixel electrode cutting pattern 162 of the pixel electrode 161. The common electrode cutting pattern 252 includes a first sub-cutting pattern 252a formed parallel with the data line 141 and a second sub-cutting pattern 252b formed parallel with the gate line 121.

The pixel electrode cutting pattern 162 and the common electrode cutting pattern 252 in the first sub-pixel electrode 161a will be described in detail as an exemplary embodiment.

The pixel electrode cutting pattern 162 and the second sub-cutting pattern 252b are formed in a straight line on the gate line 121. The first sub-pixel electrode 161a is divided into two parts, the upper and lower parts, by the pixel electrode cutting pattern 162 and the second sub-cutting pattern 252b. Meanwhile, the first sub-cutting pattern 252a extends parallel with the data line 141, that is, with the lateral side of the first sub-pixel electrode 161a, to divide the first sub-pixel electrode 161a into two parts, right and left.

Accordingly, the pixel electrode 161 is divided into four domains by the pixel electrode cutting pattern 162 and the common electrode cutting pattern 252. There four domains have substantially the same area. As described above, the pixel electrode 161 is divided into multiple domains, thereby improving a viewing angle of the LCD 1.

The liquid crystal layer 300 is disposed between the TFT substrate 100 and the color filter substrate 200. The liquid crystal layer 300 is in a vertically aligned (VA) mode, where liquid crystal molecules are aligned perpendicularly to the substrates 100 and 200 in a lengthwise direction under a voltage-off state between the substrates 100 and 200.

The liquid crystal molecules with negative dielectric anisotropy are oriented perpendicularly to an electric field in a voltage-on state. If the pixel electrode cutting pattern 162 and the common electrode cutting pattern 252 are not formed, however, the orientation of the liquid crystal molecules is not determined. Accordingly, the liquid crystal molecules are disorganized and, thus, a disinclination line is formed. The pixel electrode cutting pattern 162 and the common electrode cutting pattern 252 generate a fringe field when a voltage is applied to the liquid crystal layer 300, thereby determining the orientation of the liquid crystal molecules. Also, the liquid crystal layer 300 is divided into a plurality of domains depending on the arrangement of the pixel electrode cutting pattern 162 and the common electrode cutting pattern 252.

According to the exemplary embodiment, the data line 141, the common electrode cutting pattern 252 and the lateral side of the pixel electrode 161 are disposed parallel with one another. In other words, a direction of an electric field formed by the data line 141 corresponds to directions of an electric field formed by the common electrode cutting pattern 252 and the lateral side of the pixel electrode 161. Accordingly, as the portion of the liquid crystal layer 300 which is out of control and reduced in transmittance decreases, overall the transmittance of the LCD 1 increases.

Meanwhile, the data line 141 is formed between the pixel electrodes 161 and, thus, a display region of the pixel electrode 161 does not decrease. Accordingly, an aperture ratio of the LCD 1 increases.

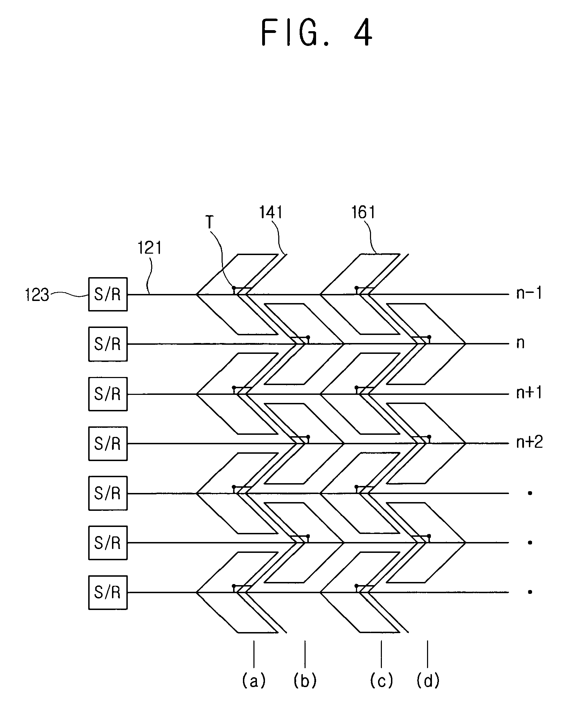

FIG. 4 illustrates connections of the pixel electrode and the lines in the LCD according to the exemplary embodiment of the present invention described above.

The pixel electrodes 161 are disposed in a line (a) having a chevron shape bent to the left and in a line (b) having a chevron shape bent to the right. One pixel electrode 161 in the line (a) faces two pixel electrodes 161 in the line (b), that is, the pixel electrodes 161 in the line (a) are disposed crosswise to the pixel electrodes 161 in the line (b). Likewise, the pixel electrodes 161 in a line (c) are disposed crosswise to the pixel electrodes 161 in a line (d) .

Each of the pixel electrodes 161 is connected to the TFT T, and the TFT T is connected to the gate line 121 and the data line 141.

The pixel electrodes 161 in the lines (a) and (b) are connected to the same data line 141. The TFTs T connected to the pixel electrodes 161 in the lines (a) and (b) are disposed alternately right and left with respect to the data line 141.

The data line 141 extends between the pixel electrodes 161 in the line (a) and the sub-pixel electrodes in the line (b). A portion of the gate line 121 passes through the middle parts of the pixel electrodes 161 in the lines (a) and (c), and a portion of another gate line 121 passes through the middle parts of the pixel electrodes 161 in the lines (b) and (d).

An end portion of the gate line 121 is connected to a shift register 123. The shift register 123 drives the gate line 121 and provides a gate-on voltage and a gate-off voltage to the gate line 121. The shift register 123 is formed on the insulating substrate 111 where the TFT T is formed.

One pixel in a triangular shape is connected to one data line 141 and three gate lines 121. A conventional pixel with three sub-pixels in one pixel, where three pixel electrodes are disposed transversely, is connected to three data lines and one gate line. In the pixel according to the exemplary embodiment, however, the data lines decrease in number by one-third, while the gate lines increase in number by three times as compared with the conventional pixel.

Generally, a circuit to drive the data line 141 is more complicated and expensive than a circuit to drive the gate line 121. In the exemplary embodiment, the circuit for the data line 141 decreases in number as the data lines 141 decrease in number by one-third, thereby reducing the cost of manufacturing the circuit for the data line 141.

On the other hand, as the gate lines 121 increase in number by three times, the cost of manufacturing the circuit for the gate line 121 may increase. In the exemplary embodiment, however, the gate line 121 is driven by the shift register 123 formed on the insulating substrate 111 and, thus, the cost of manufacturing the circuit does not increase.

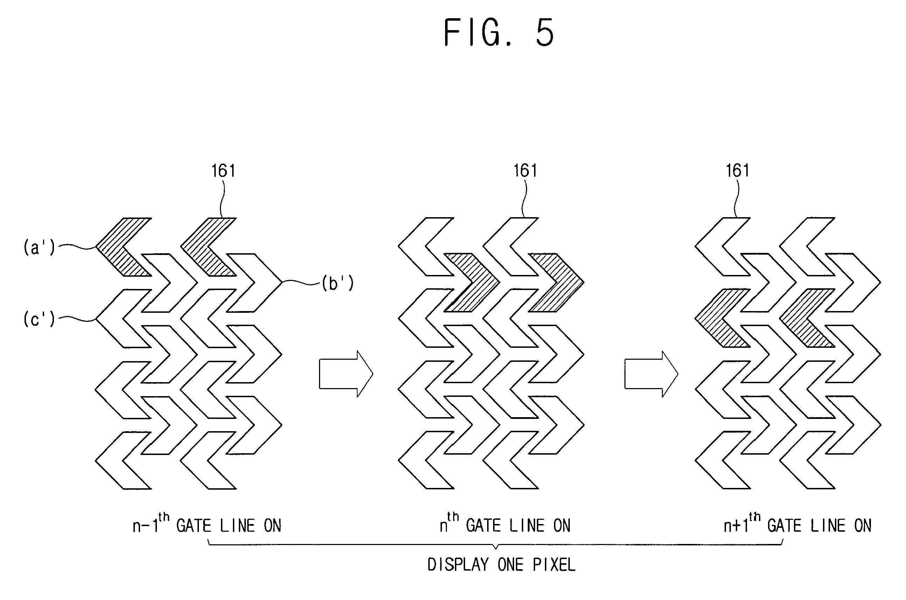

FIG. 5 illustrates a driving method of the LCD according to the exemplary embodiment of the present invention described above.

When the gate-on voltage is provided to the gate line 121 in the (n-1) th gate line, the TFT T connected thereto is turned on. Accordingly, the pixel electrodes 161 in a row (a') connected to the (n-1)th gate line 121 are turned on.

When the gate-on voltage is provided to the (n)th gate line 121, the pixel electrodes 161 in a row (b') connected to the (n)th gate line 121 are turned on.

Likewise, when the gate-on voltage is provided to the (n+1) th gate line 121, the pixel electrodes 161 in a row (c') connected to the gate line 121 in the (n+1)th are turned on. Accordingly, display of one pixel is completed. For the display of one pixel, three gate lines 121 are sequentially driven, and accordingly the data line 141 provides a data voltage for each sub-pixel electrode 161.

As described above, three pixel electrodes 161 in one pixel are driven not at the same time but sequentially. Further, the gate-on voltage is provided three times for the display of one pixel.

The LCD 1 according to the exemplary embodiment described above is suitable for a small and medium-sized display device, such as an automobile navigation system.

The small and medium-sized display device generally employs an LCD with a ppi (pixels per inch) resolution of 120 to 150. The LCD 1 according to the exemplary embodiment obtains not only a good aperture ratio over 47%, but also good transmittance, response time, etc. for the small and medium-sized display device.

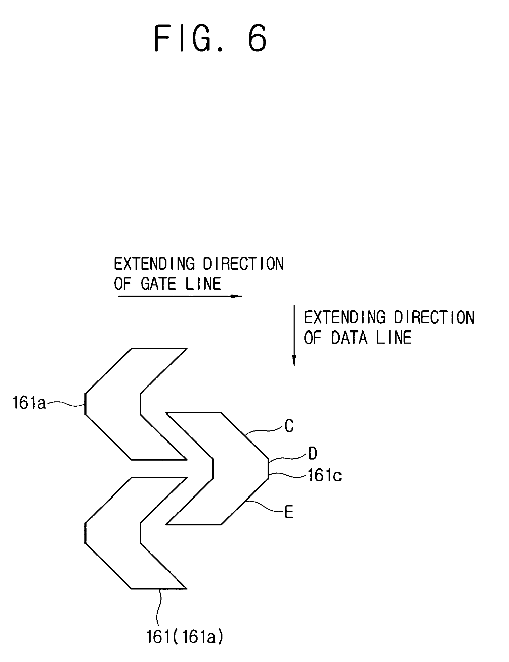

FIG. 6 is an arrangement view of a pixel electrode in an LCD according to an exemplary embodiment of the present invention.

The pixel electrode 161 is generally chevron-shaped and includes an upper part (C) and a lower part (E) of which lateral sides are slanted. The pixel electrode 161 includes a middle part (D) between the upper part (C) and the lower part (E), of which lateral sides are parallel with an extending direction of a data line. A right sub-pixel electrode 161c partially faces left sub-pixel electrodes 161a and 161b in an extending direction of a gate line.

The data line (not shown) in this exemplary embodiment may be formed along the lateral side of the pixel electrode 161 or formed into a straight line, which is not shown in FIG. 6.

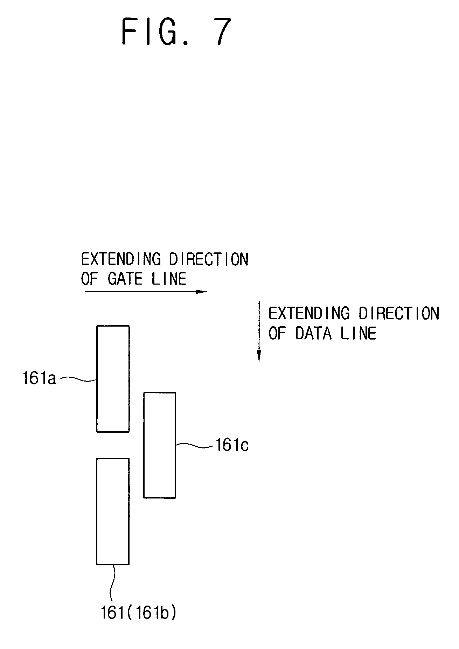

FIG. 7 shows an arrangement of a pixel electrode in an LCD according to an exemplary embodiment of the present invention.

The pixel electrode 161 is formed in a rectangular shape that extends lengthwise in an extending direction of a data line. A right sub-pixel electrode 161c partially faces left sub-pixel electrodes 161a and 161b in an extending direction of a gate line.

The data line in the exemplary embodiment may be formed in a straight line, which is not shown in FIG. 7.

As described above, exemplary embodiments of the present invention provide an LCD that is improved in transmittance and that has an improved aperture ratio.

Although exemplary embodiments have been described with reference to the accompanying drawings, it is to be understood that the present invention is not limited to these exemplary embodiments but various changes and modifications can be made by one skilled in the art without departing from the spirit and scope of the present invention. All such changes and modifications are intended to be included within the scope of the invention, as defined by the appended claims.

## Claims

1. A liquid crystal display comprising:
a first insulating substrate;
a conductor formed on the first insulating substrate and including a gate line and a data line; and
a pixel electrode electrically connected to the gate line and the data line and including a first pixel electrode and a second pixel electrode which are adjacent each other in an extending direction of the data line and a third pixel electrode partially facing both the first pixel electrode and the second pixel electrode.

2. The liquid crystal display according to claim 1, wherein the first pixel electrode, the second pixel electrode and the third pixel electrode are connected to different respective gate lines.

3. The liquid crystal display according to claim 2, wherein the gate line connected to the third pixel electrode passes along a boundary of the first pixel electrode and the second pixel electrode.

4. The liquid crystal display according to claim 2, wherein the first pixel electrode, the second pixel electrode and the third pixel electrode are connected to the same data line.

5. The liquid crystal display according to claim 4, wherein the first, second, and third pixel electrodes connected to the data line are disposed alternately right and left with respect to the data line along the extending direction of the data line.

6. The liquid crystal display according to claim 4, further comprising a shift register connected to the gate line to apply a driving signal to the gate line and formed on the first insulating substrate.

7. The liquid crystal display according to claim 1, wherein lateral sides of the pixel electrodes in the extending direction of the data line are zigzag-shaped.

8. The liquid crystal display according to claim 7, wherein the data line extends along the lateral sides of the pixel electrodes.

9. The liquid crystal display according to claim 8, wherein the lateral sides of the pixel electrode form an angle of 40 degrees to 50 degrees with respect to the extending direction of the gate line.

10. The liquid crystal display according to claim 7, wherein a pixel electrode cutting pattern is formed on the pixel electrode along the extending direction of the gate line.

11. The liquid crystal display according to claim 10, further comprising a second insulating substrate facing the pixel electrode, and a liquid crystal layer in a vertically aligned (VA) mode formed between the pixel electrode and the second insulating substrate.

12. The liquid crystal display according to claim 11, further comprising a common electrode formed on the second insulating substrate, wherein a common electrode cutting pattern is formed on the common electrode and is parallel with the lateral sides of the pixel electrodes.

13. The liquid crystal display according to claim 1, wherein the first pixel electrode, the second pixel electrode and the third pixel electrode are sequentially driven.

14. A liquid crystal display comprising,
a plurality of pixel electrodes that are chevron-shaped and that include a first pixel electrode and a second electrode disposed adjacent each other in a first direction and a third pixel electrode partially facing both the first pixel electrode and the second electrode in a second direction perpendicular to the first direction.

15. The liquid crystal display according to claim 14, wherein each pixel electrode comprises an upper part and a lower part bent from the upper part, the upper part of the third pixel electrode faces the lower part of the first pixel electrode, and the lower part of the third pixel electrode faces the upper part of the second pixel electrode.

16. The liquid crystal display according to claim 14, wherein the first pixel electrode, the second pixel electrode and the third pixel electrode are sequentially driven.

17. A liquid crystal display comprising:
an insulating substrate;
a conductor formed on the insulating substrate and including a gate line and a data line; and
a pixel electrode connected to the gate line and the data line,
the pixel electrode connected to the data line and including a first pixel electrode disposed at a left side of the data line and a second pixel electrode disposed at a right side of the data line, the first pixel electrode and the second pixel electrode partially facing in an extending direction of the gate line,
the pixel electrode being chevron-shaped,
the data line formed along a circumference of the pixel electrode.
